# EUROPEAN PATENT SPECIFICATION

(11) **EP 2 887 272 B1**
(45) Date of publication and mention of the grant of the patent: **01.11.2017**
(21) Application number: 13306819.7
(22) Date of filing: 20.12.2013
(51) Int. Cl.: G06Q 20/32, G06K 19/07, G06K 7/10, G06Q 20/34, G06Q 20/38

(54) **Hybrid NFC and RFID passive contactless card**
Hybride, passive, kontaktlose NFC- und RFID-Karte
NFC hybride et carte sans contact passif RFID

(43) Date of publication of application: 24.06.2015
(73) Proprietor: Orange, 75015 Paris (FR)
(72) Inventor: Francis, Lishoy, Egham Surrey TW20 0ER (GB); Ahmad, Zaheer, London Middlesex UB12UN (GB)
(74) Representative: Ameline, Jean-Paul B.C.

(56) References cited:
- US-A1- 2012 074 232
- GERALD MADLMAYR ET AL: "Management of Multiple Cards in NFC-Devices", 8 September 2008 (2008-09-08), SMART CARD RESEARCH AND ADVANCED APPLICATIONS; [LECTURE NOTES IN COMPUTER SCIENCE], SPRINGER BERLIN HEIDELBERG, BERLIN, HEIDELBERG, PAGE(S) 149 - 161, XP019104509, ISBN: 978-3-540-85892-8 * the whole document *

## Description

### FIELD OF THE PRESENT SYSTEM:

The present invention relates, in general, to contactless system, more precisely with a passive contactless card or token capable of interacting with multiple RFID technologies.

### BACKGROUND OF THE PRESENT SYSTEM:

Radio Frequency Identification (RFID) has found several applications in our daily life. RFID systems can be broadly categorized as short-range (proximity), medium-range (vicinity) and long-range contactless coupling systems. Near Field Communication (NFC) incorporates the contactless functionality onto mobile phones, and exists in the proximity and vicinity end of the wider RFID spectrum. NFC finds application in payments, transportation, identification, access control, entertainment, healthcare and in several other domains.

Within short-range (proximity) or medium-range (vicinity) RFID ecosystem, ISO 14443 and ISO 15693 define two exemplary standards used for instance in contactless or vicinity cards technologies. ISO 14443 are found deployed in proximity applications that require security sensitive operations such as payments, ticketing, identification, etc. In contrast, ISO 15693 based vicinity standard finds application in scenarios where extended range of communication is desired such as logistics and product tagging. Both these standards operate in the High Frequency (HF) range of 13.56MHz. In a first approximation, such technologies could be referred more globally as Near Field Communication (NFC) technologies, as opposed to long-range RFID technologies, often referred as simply "RFID" technologies.

Indeed, on the other end of RFID spectrum there exists long-range RF technologies providing further extended communication range as compared with both proximity and vicinity systems (in short, NFC). These systems typically operate in the Ultra High Frequency (UHF) band (860MHz - 960MHz) and are loosely standardized within ISO 18000-6 (for example, EPC Gen2). Such UHF tokens are primarily based on logic incorporated within memory having minimal security. Whereas ISO 14443 proximity tokens are primarily microcontroller based architectures, with large memory and capable of running an operating system, virtual machines, security algorithms, cryptographic functions, and also offers a good measure of tamper resistance.

Today, such technologies are broadly used. RFID technologies are for example use d to develop RFID based loyalty cards. Such RFID based loyalty cards present various advantages for the consumers and the retailers. From the customers' point of view, one main advantage is that a RFID based loyalty card can be kept inside a pocket ora wallet, as the RFID technology permits the loyalty card to be read at a certain distance. Thus, a customer can be automatically recognized when entering a certain shop or supermarket, and a personalized service may be triggered, like for example personalized promotion sent to the customer, either by SMS or mail.

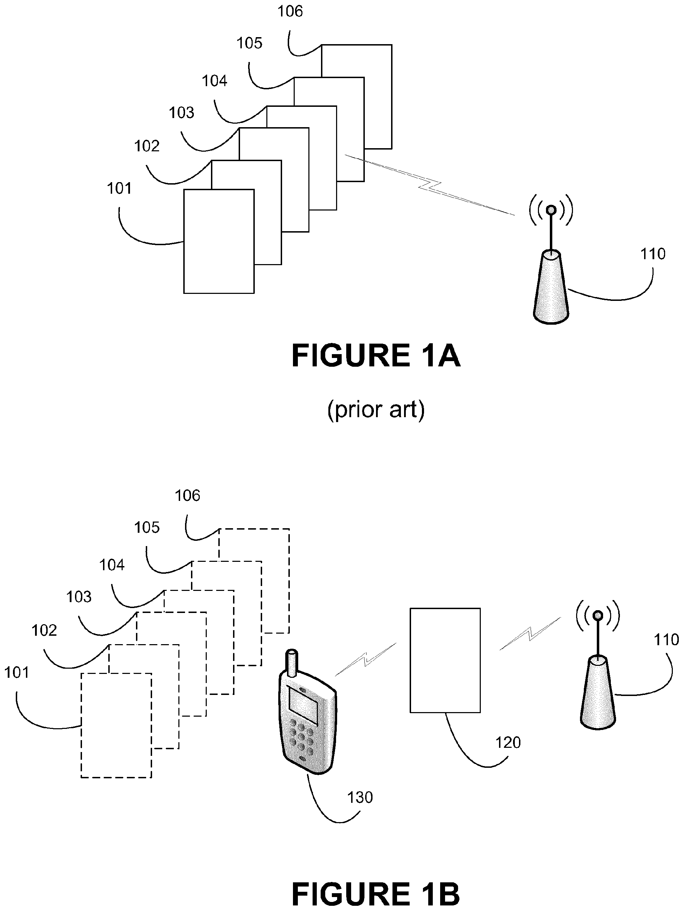

Nevertheless, if the RFID technology facilitates the way a customer may manage a loyalty card, it does not solve the problem of managing various loyalty cards. Indeed, a customer still needs to have with him as many loyalty cards as the loyalty program she wants to participate to (see FIG. 1A).

Thus, there is still a need for a method for improving the management a plurality of RFID based contact less cards.

U.S. patent application publication No. US 2012/074232 A1 discloses universal cards that can be used in place of all the other traditional cards which a person may want to carry.

The document entitled "Management of multiple cards in NFC devices," by Gerald Madlmayr et al., discloses a method of combining NFC with integrated smart card chips in a mobile device for emulating different cards, using a fixed Unique Identifier (UID) dedicated to a Secure Element Controller.

### SUMMARY OF THE PRESENT SYSTEM:

It is an object of the present system to overcome disadvantages and/or make improvements in the prior art.

Present system idea is based on the fact that today most smartphones do integrate NFC features, integrating especially the active feature of a NFC reader but are lacking RFID features (that is to say, long range RFID features). The idea behind the system as described hereaftercan be used to replace various RFID based cards, for example RFID based loyalty cards, by a unique dual or hybrid radio technology enabled token or contactless card managed by using the NFC cap abilities of a smartphone.

Indeed, present system relates to a contactless card comprising at least an RFID radio module for handling data according to ISO 18000 standard, an NFC radio module for handling data according to ISO 14443 or ISO 15693 standard, a controller and a memory; the controller being operable to receive a message through a first one of the radio modules, the message comprising application data and an associated ID in the format of the first one of the radio modules, extract the application data and the associated ID from the received message, convert the application data and the associated ID into a format compatible with the other one of the radio modules, store the converted application data in the memory in association with the ID for subsequent presentation in response to a request from a reader compatible with the otherone ofthe radio modules, the request comprising the associated ID. The controller of the token is further operable to receive a message through the first one of the radio modules, the message comprising a security policy, the security policy being signed and when the signature of the security policy corresponds to a predefined signature stored in the memory of the contactless card, update a security policy stored in the memory using the received security policy.

In one embodiment of the present system, the first one of the radio modules is a NFC radio module, while the other one of the radio modules is a RFID radio module.

In another embodiment of the present system, the first one of the radio modules is a RFID radio module, while the otherone of the radio modules is a NFC radio module.

Advantageously, a RFID based token or contactless card (in short, token or card) may be managed via NFC communication. This is particularly useful when considering that application data can be loyalty program data associated to a customer. Indeed, using present system, a customer, using a NFC enabled smartphone may load loyalty program data (or profile) to a unique token or card;
the unique token replacing the different RFID based loyalty cards. In this case, the ID associated to the application data shall be also associated to a loyalty program.
In one embodiment of present system, the controller of the token is further operable to receive a request through the other one of the radio modules, the request comprising at least an ID, select application data in the other one of the radio modules compatible format from the memory according to the ID and emit the selected application data via the otherone ofthe radio modules.

Once loaded with the different loyalty program data, the token may be used to replace the various RFID based loyalty cards, answering to the RFID request of the RFID reader placed on the shops or supermarket with the data application corresponding to the loyalty program. Such identification ofthe loyalty program is based on the ID comprised on the request.

Advantageously, security policies may be pushed to or updated on the token via a NFC enabled smartphone. In order to prevent security policies to be modified by unauthorized user, an authentication mechanism shall be implemented on the token.

In another alternative embodiment, the controller of the token is further operable to apply the security policy when selecting data from the memory according to the ID, the se c urity policy filtering the selection of the data from the memory.

Security policy on the token may prevent some data to be selected when answering to a RFID request. Continuing with the exemplary embodiment of loyalty cards, the security policy may prevent personal phone number of a user to be provided during a RFID request, even if such data belongs to the loyalty program profile.

Present system also reflates to a method for storing application data in a memory of a passive contactless card, the passive contactless card comprising at least an RFID radio module for handling data according to ISO 18000 standard, an NFC radio module for handling data according to ISO 14443 or ISO 15693 standard, a controller, and a memory, the method being executed by the controller of the passive contactless card and comprising: receiving a message through a first one of the radio modules, the message comprising application data and an ID in a format compatible with the first one ofthe radio modules, extracting the application data and the ID from the received message, converting the application data and the ID to a format compatible with the other one of the radio modules and storing the converted application data in the memory in association with the ID for subsequent presentation in response to a request from a reader compatible with the otherone of the radio modules, the request comprising the associated ID. The proposed method further comprises: receiving a message through the first one of the radio modules, the message comprising a security policy, the security policy being signed, and when the signature of the security policy corresponds to a predefined signature stored in the memory of the contactless card, updating a security policy stored in the memory using the received security policy.

Another object of the invention concerns a computer program or application software, in particular computer programs on or in a non-transitory computer readable medium, suitable for storing application data in a memory of a passive token in accordance with the method described in details here after. These programs can use any programming language, and be in the form of source code, binary code, orofcode intermediate between source code and object code such as in a partially compiled form, orin any other desirable form for implementing the methods according to the invention.

The information medium may be any entity ordevice capable of storing the software. For example, the medium can comprise a storage means, such as a ROM, for example a CD/DVD ROM ora microelectronic circuit ROM, ora magnetic recording means, for example a diskette (floppy disk) or a hard disk or else a transient memory such as EEPROM, FLASH, SRAM and RAM.

### BRIEF DESCRIPTION OF THE DRAWINGS:

The invention is explained in further detail, and by way of example, with reference to the accompanying drawings wherein:
FIG. 1A shows a portfolio of different RFID based loyalty cards (prior art);
FIG. 1B shows an illustration of an improvement brought to FIG. 1A situation implementing present system;
FIG. 2 shows an embodiment of present system token;
FIG. 3 illustrates an embodiment of the present system, the token communicating with a NFC enabled smartphone and a RFID reader;
FIG. 4 shows a flowchart of present method.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements. It should be understood hereafter that NFC enabled devices are not limited to smartphones and that any NFC enabled electronic device may be used.

FIG. 1A shows a portfolio of different RFID based loyalty cards (prior art). In FIG. 1A, each card or token 101, 102, 103, 104, 105 and 106 is a RFID based loyalty card. In such situation, a customer needs as many loyalty cards as loyalty programs he wants to participate to.

FIG. 1B shows an illustration of possible improvement brought to FIG. 1A situation implementing present system. Indeed, as represented in dotted lines, the cards or token 101, 102, 103, 104, 105 and 106 are advantageously replaced by a NFC capable smartphone 130 and the token according to the present system 120. A user, instead of carrying the various loyalty cards 101, 102, 103, 104, 105 and 106 only needs to have the token 120, manageable through his NFC capable smartphone, as explained hereafter.

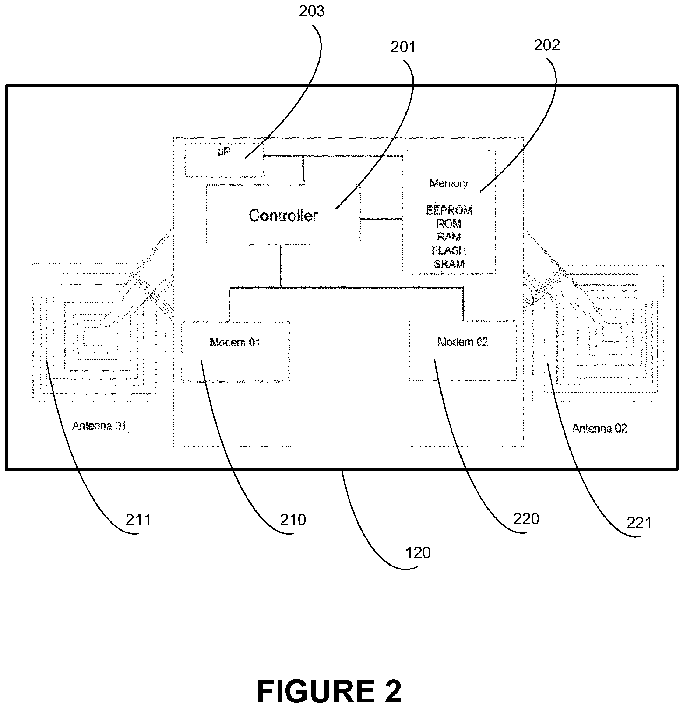

FIG. 2 shows an exemplary embodiment of present system token or card 120. The token 120 comprises a controller 201, memory pool 202 (in short, memory), microprocessor 203 and radio modules. Two radio modules, illustrated comprising a modem and an antenna, are presented here. A first radio module is represented, comprising modem 210 and antenna 211 as well as another radio module comprising modem 220 and corresponding antenna 221. In one embodiment of present system, the token comprises at least a RFID radio module (modem 220 and antenna 221) for handling data according to a ISO 18000 standard and a NFC radio module (modem 210 and antenna 211) for handling data according to ISO 14443 or ISO 15693 standard, a controller. In a complementary embodiment of present system, the token may comprise more than two radio modules.

In a further embodiment of the present system, the memory pool 202 could comprise a secure (or dedicated) memory and a normal (or shared) memory based on system requirements. Secure (or dedicated) memory is used to store and process security sensitive data and operations; such as cryptographic keys, algorithms and security policies. Any access to the secure (or dedicated) memory would require authentication. This authentication is achieved based on any computational and/or cryptographic techniques such as asymmetric and/or symmetric and/or hashing techniques. The authentication protocol is based on static and/or dynamic processes. The access control to the secure memory areas is mutually exclusive between the supported technologies. The normal (or shared) memory can be used for non-security related operations such as executing global policies and storing non-security data.

In a complementary embodiment of the present system, the memory pool 202 is divided into segments and marked as "Dedicated" or "Shared". The main advantage of dividing memory into secure (or dedicated) and normal (or shared) is to provide trust to multiple parties using the token.

Dedicated memory can only be accessed by its corresponding radio module. For example, dedicated memory that is assigned for a radio module can only be accessed via this radio module and no other radio module. It is in this dedicated memory any sensitive data, security algorithms, security keys, applications/applets, etc are stored. Personalized application data is also stored in dedicated memory space. By having dedicated memory segments enables to realize mutually exclusive operations such as initialization.

Any supported radio technology may have its own memory classification. For example in ISO 18000 -EPC Gen2 the memory is categorized as "EPC Memory", "Reserved Memory", "User memory" and "TID Memory". Every supported radio module goes through several application states. For example in ISO 18000, at any instance the supported token goes through one of the several states such as "Ready", "Arbitrate", "Reply", "Acknowledged", "Open", "Secured" and "Killed". These states are realized by using dedicated memory.

The shared memory denotes the segments/address space within a radio module or entity that can be accessed by the controller 201 but by no other module of the token 120. It stores data that needs to be transformed by the controller 201 as needed.

The controller 201 stores sensitive data such as security policies, security keys, applications/applets in its secure memory space. Such memory space cannot be accessed by any other entity than the module it is associated to and hence is marked as dedicated. The normal memory space of controller 201 is marked as dedicated and shared for storing non-sensitive data. It also supports operations such as radio initialization of the supported token technologies. Any security related operations of initialization is handled via the respective secure memory.

The memory organization that is described above can be realized on a single memory module or by using multiple memory modules, by using any technology known to the man skilled in the art.

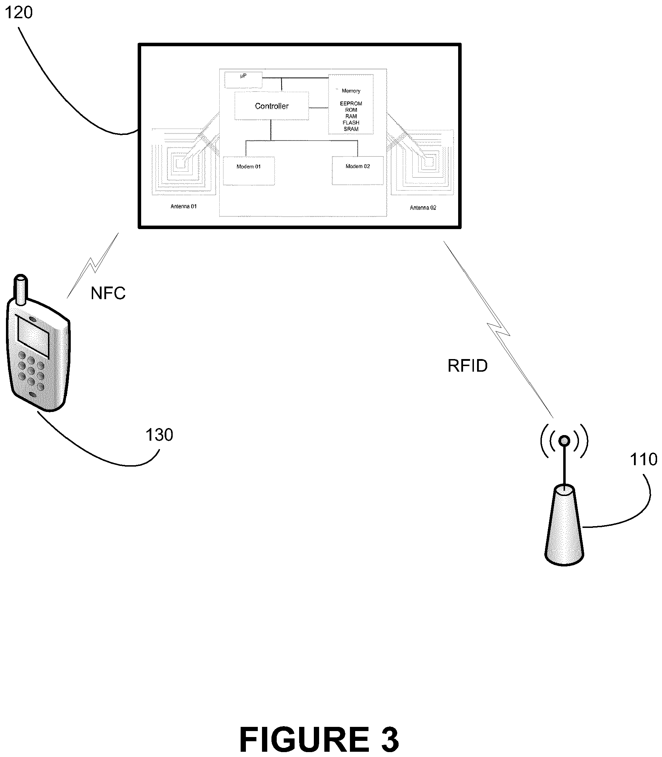

FIG. 3 illustrates an embodiment of the present system, the token 120 being able to communicate with a NFC enabled smartphone 130 and a RFID reader 110.

In one particular embodiment of the present system, it should be understood that when saying that the token 120 being is able to communicate with a NFC enabled smartphone 130 and a RFID reader 110, it means that:
- the NFC enabled smartphone 130 is able to interrogate the token 120 via NFC compatible technology,
- the RFID reader 110 is able to interrogate the token 120 via RFID compatible technology.

In other words, the token 120 is a passive token, passive meaning that the token 120 is acting as a passive transponder, being energized and activated by waves from an outside source. Outside source here is either the NFC enabled smartphone 130 or the RFID reader 110, according to the situation. Such passive token implementation may rely on resonant inductive coupling or backscattering technology, as the man skilled in the art will know. It is to be noted that such technology allows a powering of at least some component of the token 120 such as a radio module (i. e. a modem), the controller 201, the microprocessor 203 and memory 202.

In another embodiment of the present system, the token 120 may comprise autonomous powering, possibly through batteries or use energy harvesting techniques.

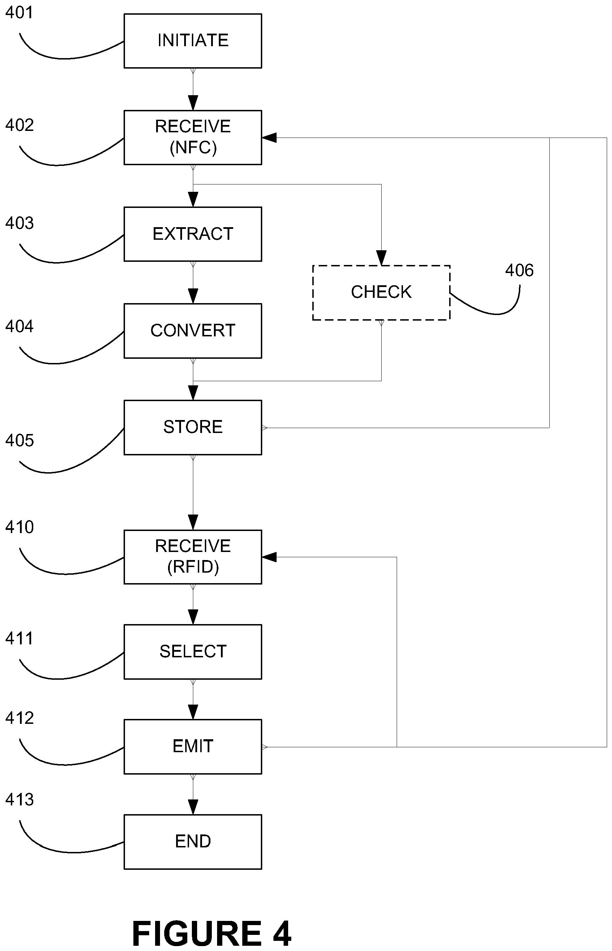

FIG. 4 shows a flowchart illustrating an embodiment of the present method. In a first step 401, the NFC radio module (comprising at least the modem 210 and the antenna 211) possibly needs some initialization process.. The controller 201 may ensure that initialization of all supported radio technologies is performed adequately. The man skilled in the art will follow for example ISO/IEC 14443-3 and 14443-4 standards implementation.

In a second step 402, the token - that is to say, the controller 201 of the token 120 - receives a message through the NFC radio module (comprising at least the modem 210 and the antenna 211), the message comprising application data and an associated ID in an NFC format. In one embodiment, the ID may be defined as identifying a certain loyalty program, whereas the application data associated to this ID shall be a user profile, possibly comprising information such as personal data, shopping list, pending promotional offers, vouchers, etc.

In a further step 403, the controller 201 extracts the application data and the associated ID from the previously received message. Application data and ID may be temporary stored in a certain part of the memory, like a shared memory, or on the contrary, on a dedicated part of the memory. Extraction of the application data and the ID may comprise a step of integrity check of the extracted data or possibly an authentication through some mechanism not described here but possibly using cryptographic or computational mechanisms and cryptographic keys.

In a step 404, the controller 201 converts the application data and the associated ID from the NFC format to a RFID compatible format. Indeed, NFC and RFID data format are following different standards. Such conversion may comprise presentation of data modification or adaptation of some data field, possibly by changing a data field length. But some more complex operation such as transformation of data may be performed. That would be the case if a field in one protocol does not exist in the other protocol. Such transformation may rely on conversion table stored in the token memory 202.

In a step 405, the controller 201 of the token stores the converted application data in the memory 202 in association with the ID for subsequent presentation in response to a request from an RFID reader comprising the associated ID. Application data and ID are stored in association in the memory 202, either on a shared area or a dedicated area depending on the embodiment of present system.

Such steps 402 to 405 may be repeated. Like that, a user, through an application installed on his smartphone, said application managing - directly or via the core system - the NFC module of the smartphone, may manage different loyalty programs, uploading them to the token. And update of a loyalty program profile may be realized as simply as by uploading the new application data in association with ID; the new application data being overwritten on the token memory 202 when received. One may note that steps 402 to 405 are enabled through the powering of the NFC module of the smartphone upload.

In the step 402, the token receives
a message through the NFC radio module, the message comprising a security policy, the security policy being signed. A security policy is a set of rules enforced by the controller 201, said rules for example guarantying that data from dedicated memory area is not shared with any unauthorized party. Thus, the controller 201 may monitor all requests to access memory 202 and enforces the desired security policy, either by authorizing or not the request, or by filtering some field or data from the request or from the answer to the request. On the contrary, a security policy may also add some data to an answer to a request, forcing for example to add a signature to any answer.

In step 406, the controller 201 checks
the signature received in step 402, for example comparing said signature to a predefined list of signature stored in the memory 202. If the signature does not correspond, the received message may be ignored. Otherwise, the security policy is stored in the memory 202, possibly updating a previously stored security policy.

In an alternative embodiment of the present system, this step 406 of checking the signature received within a message may be applied to all the received messages as long as the received messages are signed. A message with no signature or with an unrecognized signature may be ignored. Optionally a message may be emit in response to a received message with no signature or with an unrecognized signature to notify that an error has been detected.

In a step 410, the token 120, more precisely the controller 201, receives an RFID request through the RFID radio module, the RFID request comprising at least an ID. Contrary to previous step 402, this time the request is coming through the antenna 221 and the modem 220. The request is possibly emitted by a RFID reader 110.

It is to be noted that step 410 may need a previous initiation step similar to step 401, but this time initiating the RFID module. Such step is not represented here. Moreover, the sequential flow between step 405 and step 410 is purely for the description, step 410 and following being uncorrelated to the execution of steps 401 to 406.

In a step 411, the controller 201 selects application data from the memory 202 according to the ID received in the message. Thus, using the received ID, the controller 201 may differentiate a RFID request coming from various loyalty programs provider, and select in the memory 202 the right application data, that is to say, the right profile associated to the right loyalty program.

In a complementary embodiment, during the step 411, when selecting data from the memory 202 according to the ID, the controller 201 may apply the security policy, the security policy filtering the selection of the data from the memory. Indeed, using a security policy received through the NFC module as described previously in step 402, the system may prevent some application data to be selected. The user may for example set up and upload to the token a security policy to prevent his personal phone number - if included in a loyalty program profile - to be selected.

In a next step 412, the token 120 emits the selected application data via the RFID radio module. That is to say that the controller 201, using the previously selected application data retrieved from the memory 202 will emit through the modem 220 and the antenna 221 an RFID message in response to the request received in step 410, said message comprising the selected application data.

Steps 410 to 412 may be repeated as many times as necessary, possibly with request from different RFID readers corresponding to different loyalty program providers. One may note that steps 410 to 412 are enabled through the RFID request from the RFID reader.

In a step 413, when no more requests are received by the token, either through the RFID or the NFC radio module, the token, being a passive token, is no more powered on.

It is to be noted that in another embodiment of the present system, the role of the RFID radio module and of the NFC radio module may be exchanged. Possibly in a further embodiment of the present system, the two RFID and NFC radio modules may act indifferently according to the previous description of FIG. 4 or by exchanging their roles alternatively.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the scope of the claims that follow. Further, while exemplary illustrations were provided to facilitate an understanding of the present system, other system may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A contact less card (120) comprising at least an RFID radio module (220-221) for handling data according to ISO 18000 standard, an NFC radio module (210-211) for handling data according to ISO 14443 or ISO 15693 standard, a controller (201) and a memory (202); the controller (201) being operable to :
- receive (402) a message through a first one of the radio modules (210-211, 220-221), the message comprising application data and an associated ID in the format of the first one ofthe radio modules (210-211, 220-221),
- extract (403) the application data and the associated ID from the received message,
- convert (404) the application data and the associated ID into a format compatible with the otherone of the radio modules (210-211, 220-221),
- store (405) the converted application data in the memory (202) in association with the ID for subsequent presentation in response to a request from a reader compatible with the otherone ofthe radio modules (210-211, 220-221), the request comprising the associated ID,
wherein the controller (201) is further operable to:
- receive a message through the first one of the radio modules (210-211, 220-221), the message comprising a security policy, wherein the security policy is signed,
- when the signature of the security policy corresponds to a predefined signature stored in the memory (202) of the contactless card, update a security policy stored in the memory (202) using the received security policy.

2. The contactless card (120) according to claim 1, wherein the controller(201) is further operable to:
- receive (410) a request through the otherone ofthe radio modules (210-211, 220-221), the request comprising at least an ID,
- select (411) application data in the other one of the radio modules (210-211, 220-221) compatible format from the memory (202) according to the ID,
- emit (412) the selected application data via the other one of the radio modules (210-211, 220-221).

3. The contactless card (120) according to one of the previous claims, wherein the controller(201) is further operable to:
- apply the security policy when selecting data from the memory according to the ID,
- the security policy filtering the selection of the data from the memory.

4. The contact less card (120) according to one of the previous claims, wherein the first one of the radio modules (210-211, 220-221) is an NFC radio module (210-211), while the other one of the radio modules (210-211, 220-221) is an RFID radio module (220-221).

5. The contactless card (120) according to one of the previous claims 1 to 3, wherein the first one of the radio modules (210-211, 220-221) is an RFID radio module (220-221), while the other one of the radio modules (210-211, 220-221) is an NFC radio module (210-211).

6. A method for storing application data in a memory (202) of a passive contactless card (120), the passive contactless card comprising at least an RFID radio module (220-221) for handling data according to ISO 18000 standard, an NFC radio module (210-211) for handling data according to ISO 14443 or ISO 15693 standard, a controller (201), and a memory (202), the method being executed by the controller of the passive contactless card and comprising:
- receiving (402) a message through a first one of the radio modules (210-211, 220-221), the message comprising application data and an ID in a format compatible with the first one ofthe radio modules (210-211, 220-221),
- extracting (403) the application data and the ID from the received message,
- converting (404) the application data and the ID to a format compatible with the other one of the radio modules (210-211, 220-221),
- storing (405) the converted application data in the memory in association with the ID for subsequent presentation in response to a request from a reader compatible with the other one of the radio modules, the request comprising the associated ID,
the method further comprising:
- receiving a message through the first one ofthe radio modules(210-211, 220-221), the message comprising a security policy, wherein the security policy is signed,
- when the signature of the security policy corresponds to a predefined signature stored in the memory (202) of the contactless card, updating a security policy stored in the memory (202) using the received security policy.

7. The method according to claim 6, further comprising:
- applying the security policy when selecting data from the memory according to the ID, the security policy filtering the selection of the data from the memory.

8. The method according to claim 6, wherein the first one of the radio modules (210-211, 220-221) is an NFC radio module (210-211), while the otherone ofthe radio modules (210-211, 220-221) is an RFID radio module (220-221).

9. The method according to claim 6, wherein the first one of the radio modules (210-211, 220-221) is an RFID radio module (220-221), while the otherone ofthe radio modules (210-211, 220-221) is an NFC radio module (210-211).

10. An application program embodied on a non-transitory computer readable medium and arranged to execute the method of one of the claims 6 to 9.

## Patentansprüche

1. Kontaktlose Karte (120), aufweisend mindestens ein RFID-Funkmodul (220-221) zur Handhabung von Daten gemäß der ISO 18000-Norm, ein NFC-Funkmodul (210-211) zur Handhabung von Daten gemäß der ISO 14443 oder ISO 15693-Norm, eine Steuerung (201), und einen Speicher (202); wobei die Steuerung (201) betreibbar ist zum:
- Empfangen (402) einer Nachricht durch ein erstes der Funkmodule (210-211, 220-221), wobei die Nachricht Anwendungsdaten und eine zugehörige ID in dem Format des ersten der Funkmodule (210-211, 220-221) aufweist,
- Extrahieren (403) der Anwendungsdaten und der zugehörigen ID aus der empfangenen Nachricht,
- Umwandeln (404) der Anwendungsdaten und der zugehörigen ID in ein Format, das mit dem anderen der Funkmodule (210-211, 220-221) kompatibel ist,
- Speichern (405) der umgewandelten Anwendungsdaten in dem Speicher (202) in Verbindung mit der ID für eine nachfolgende Darstellung in Antwort auf eine Anforderung von einem Leser, der mit dem anderen der Funkmodule (210-211, 220-221) kompatibel ist, wobei die Anforderung die zugehörige ID aufweist,
wobei die Steuerung (201) ferner betreibbar ist zum:
- Empfangen einer Nachricht durch das erste der Funkmodule (210-211, 220-221), wobei die Nachricht eine Sicherheitsrichtlinie aufweist, wobei die Sicherheitsrichtlinie signiert ist,
- wenn die Signatur der Sicherheitsrichtlinie einer vordefinierten Signatur entspricht, die in dem Speicher (202) der kontaktlosen Karte gespeichert ist, Aktualisieren einer Sicherheitsrichtlinie, die in dem Speicher (202) gespeichert ist, unter Verwendung der empfangenen Sicherheitsrichtlinie.

2. Kontaktlose Karte (120) nach Anspruch 1, wobei die Steuerung (201) ferner betreibbar ist zum:
- Empfangen (410) einer Anfrage durch das andere der Funkmodule (210-211, 220-221), wobei die Anforderung mindestens eine ID aufweist,
- Auswählen (411) von Anwendungsdaten in dem zu dem anderen der Funkmodule (210-211, 220-221) kompatiblen Format aus dem Speicher (202) gemäß der ID,
- Ausgeben (412) der ausgewählten Anwendungsdaten über das andere der Funkmodule (210-211, 220-221).

3. Kontaktlose Karte (120) nach einem der vorhergehenden Ansprüche, wobei die Steuerung (201) ferner betreibbar ist zum:
- Anwenden der Sicherheitsrichtlinie bei der Auswahl von Daten aus dem Speicher gemäß der ID,
- wobei die Sicherheitsrichtlinie die Auswahl der Daten aus dem Speicher filtert.

4. Kontaktlose Karte (120) nach einem der vorhergehenden Ansprüche, wobei das erste der Funkmodule (210-211, 220-221) ein NFC-Funkmodul (210-211) ist, während das andere der Funkmodule (210-211, 220-221) ein RFID-Funkmodul (220-221) ist.

5. Kontaktlose Karte (120) nach einem der vorhergehenden Ansprüche 1 bis 3, wobei das erste der Funkmodule (210-211, 220-221) ein RFID-Funkmodul (220-221) ist, während das andere der Funkmodule (210-211, 220-221) ein NFC-Funkmodul (210-211) ist.

6. Verfahren zum Speichern von Anwendungsdaten in einem Speicher (202) einer passiven kontaktlosen Karte (120), wobei die passive kontaktlose Karte mindestens ein RFID-Funkmodul (220-221) zur Handhabung von Daten gemäß der ISO 18000-Norm, ein NFC-Funkmodul (210-211) zur Handhabung von Daten gemäß der ISO 14443 oder ISO 15693-Norm, eine Steuerung (201), und einen Speicher (202) aufweist, wobei das Verfahren von der Steuerung der passiven kontaktlosen Karte ausgeführt wird und aufweist:
- Empfangen (402) einer Nachricht durch ein erstes der Funkmodule (210-211, 220-221), wobei die Nachricht Anwendungsdaten und eine ID in einem Format aufweist, das mit dem ersten der Funkmodule (210-211, 220-221) kompatibel ist,
- Extrahieren (403) der Anwendungsdaten und der ID aus der empfangenen Nachricht,
- Umwandeln (404) der Anwendungsdaten und der ID in ein mit dem anderen der Funkmodule (210-211, 220-221) kompatiblen Format,
- Speichern (405) der umgewandelten Anwendungsdaten in dem Speicher in Verbindung mit der ID für eine nachfolgende Darstellung in Antwort auf eine Anforderung von einem Leser, der mit dem anderen der Funkmodule kompatibel ist, wobei die Anforderung die zugehörige ID aufweist,
wobei das Verfahren ferner aufweist:
- Empfangen einer Nachricht durch das erste der Funkmodule (210-211, 220-221), wobei die Nachricht eine Sicherheitsrichtlinie aufweist, wobei die Sicherheitsrichtlinie signiert ist,
- wenn die Signatur der Sicherheitsrichtlinie einer vordefinierten Signatur entspricht, die in dem Speicher (202) der kontaktlosen Karte gespeichert ist, Aktualisieren einer Sicherheitsrichtlinie, die in dem Speicher (202) gespeichert ist, unter Verwendung der empfangenen Sicherheitsrichtlinie.

7. Verfahren nach Anspruch 6, ferner aufweisend:
- Anwenden der Sicherheitsrichtlinie bei der Auswahl von Daten aus dem Speicher gemäß der ID, wobei die Sicherheitsrichtlinie die Auswahl der Daten aus dem Speicher filtert.

8. Verfahren nach Anspruch 6, wobei das erste der Funkmodule (210-211, 220-221) ein NFC-Funkmodul (210-211) ist, während das andere der Funkmodule (210-211, 220-221) ein RFID-Funkmodul (220-221) ist.

9. Verfahren nach Anspruch 6, wobei das erste der Funkmodule (210-211, 220-221) ein RFID-Funkmodul (220-221) ist, während das andere der Funkmodule (210-211, 220-221) ein NFC-Funkmodul (210-211) ist.

10. Anwendungsprogramm, das auf einem nicht transitorischen computerlesbaren Medium verkörpert ist und dazu eingerichtet ist, das Verfahren nach einem der Ansprüche 6 bis 9 auszuführen.

## Revendications

1. Carte sans contact (120) comprenant au moins un module radio RFID (220 à 221) pour traiter des données selon la norme ISO 18000, un module radio NFC (210 à 211) pour traiter des données selon la norme ISO 14443 ou ISO 15693, un dispositif de commande (201) et une mémoire (202) ; le dispositif de commande (201) étant destiné :
- à recevoir (402) un message au moyen d'un premier module radio parmi les modules radio (210 à 211, 220 à 221), le message comprenant des données d'application et un identifiant (ID) associé dans le format du premier module radio parmi les modules radio (210 à 211, 220 à 221),
- à extraire (403) les données d'application et l'ID associé du message reçu,
- à convertir (404) les données d'application et l'ID associé en un format compatible avec l'autre module radio parmi les modules radio (210 à 211, 220 à 221),
- à stocker (405) les données d'application converties dans la mémoire (202) en association avec l'ID pour une présentation ultérieure en réponse à une requête provenant d'un lecteur compatible avec l'autre module radio parmi les modules radio (210 à 211, 220 à 221), la requête comprenant l'ID associé,
dans laquelle le dispositif de commande (201) est en outre destiné :
- à recevoir un message au moyen du premier module radio parmi les modules radio (210 à 211, 220 à 221), le message comprenant une police de sécurité, dans laquelle la police de sécurité est signée,
- lorsque la signature de la police de sécurité correspond à une signature prédéfinie stockée dans la mémoire (202) de la carte sans contact, à mettre à jour une police de sécurité stockée dans la mémoire (202) à l'aide de la police de sécurité reçue.

2. Carte sans contact (120) selon la revendication 1, dans laquelle le dispositif de commande (201) est en outre destiné :
- à recevoir (410) une requête au moyen de l'autre module radio parmi les modules radio (210 à 211, 220 à 221), la requête comprenant au moins un ID,
- à sélectionner (411) des données d'application dans le format compatible de l'autre module radio parmi les modules radio (210 à 211, 220 à 221) à partir de la mémoire (202) en fonction de l'ID,
- à émettre (412) les données d'application sélectionnées par le biais de l'autre module radio parmi les modules radio (210 à 211, 220 à 221).

3. Carte sans contact (120) selon l'une quelconque des revendications précédentes, dans laquelle le dispositif de commande (201) est en outre destiné :
- à appliquer la police de sécurité lors d'une sélection de données à partir de la mémoire en fonction de l'ID,
- la police de sécurité filtrant la sélection des données à partir de la mémoire.

4. Carte sans contact (120) selon l'une quelconque des revendications précédentes, dans laquelle le premier module radio parmi les modules radio (210 à 211, 220 à 221) est un module radio NFC (210 à 211) tandis que l'autre module radio parmi les modules radio (210 à 211, 220 à 221) est un module radio RFID (220 à 221).

5. Carte sans contact (120) selon l'une quelconque des précédentes revendications 1 à 3, dans laquelle le premier module radio parmi les modules radio (210 à 211, 220 à 221) est un module radio RFID (220 à 221) tandis que l'autre module radio parmi les modules radio (210 à 211, 220 à 221) est un module radio NFC (210 à 211).

6. Procédé pour stocker des données d'application dans une mémoire (202) d'une carte passive sans contact (120), la carte passive sans contact comprenant au moins un module radio RFID (220 à 221) pour traiter des données selon la norme ISO 18000, un module radio NFC (210 à 211) pour traiter des données selon la norme ISO 14443 ou ISO 15693, un dispositif de commande (201) et une mémoire (202),
le procédé étant exécuté par le dispositif de commande de la carte passive sans contact et comprenant :
- recevoir (402) un message au moyen d'un premier module radio parmi les modules radio (210 à 211, 220 à 221), le message comprenant des données d'application et un ID dans un format compatible avec le premier module radio parmi les modules radio (210 à 211, 220 à 221),
- extraire (403) les données d'application et l'ID du message reçu,
- convertir (404) les données d'application et l'ID en un format compatible avec l'autre module radio parmi les modules radio (210 à 211, 220 à 221),
- stocker (405) les données d'application converties dans la mémoire en association avec l'ID pour une présentation ultérieure en réponse à une requête provenant d'un lecteur compatible avec l'autre module radio parmi les modules radio, la requête comprenant l'ID associé,
le procédé comprenant en outre :
- recevoir un message au moyen du premier module radio parmi les modules radio (210 à 211, 220 à 221), le message comprenant une police de sécurité, dans lequel la police de sécurité est signée,
- lorsque la signature de la police de sécurité correspond à une signature prédéfinie stockée dans la mémoire (202) de la carte sans contact, mettre à jour une police de sécurité stockée dans la mémoire (202) à l'aide de la police de sécurité reçue.

7. Procédé selon la revendication 6, comprenant en outre :
- appliquer la police de sécurité lors d'une sélection de données à partir de la mémoire en fonction de l'ID, la police de sécurité filtrant la sélection des données à partir de la mémoire.

8. Procédé selon la revendication 6, dans lequel le premier module radio parmi les modules radio (210 à 211, 220 à 221) est un module radio NFC (210 à 211) tandis que l'autre module radio parmi les modules radio (210 à 211, 220 à 221) est un module radio RFID (220 à 221).

9. Procédé selon la revendication 6, dans lequel le premier module radio parmi les modules radio (210 à 211, 220 à 221) est un module radio RFID (220 à 221) tandis que l'autre module radio parmi les modules radio (210 à 211, 220 à 221) est un module radio NFC (210 à 211).

10. Programme d'application intégré sur un support lisible par ordinateur non transitoire et conçu pour exécuter le procédé selon l'une quelconque des revendications 6 à 9.
